# EUROPÄISCHE PATENTANMELDUNG

(11) **EP 2 871 732 A1**
(43) Veröffentlichungstag der Anmeldung: **13.05.2015**
(21) Anmeldenummer: 13192376.5
(22) Anmeldetag: 11.11.2013
(51) Int. Cl.: H02G 1/12

(54) **Vorrichtung zur Öffnung des geflochtenen Schirms eines Kabels**

(71) Anmelder: Schleuniger Holding AG, 3608 Thun (CH)
(72) Erfinder: Messina, Carmelo, 6340 Baar (CH); Alvarez, Sergio, 8630 Rüti (CH); Knuchel, Walter, 8624 Grüt (CH); Meierhans, Ivo, 6005 Luzern (CH)
(74) Vertreter: Patentbüro Paul Rosenich AG

(57) **Zusammenfassung**

Eine Vorrichtung zur Öffnung des geflochtenen Schirms (1) eines Kabels (3) umfasst eine Halteanordnung/Klemmvorrichtung (6) zum Klemmen des abgemantelten Kabels (3), sowie eine Zentriereinrichtung (8), zumindest eine axial auf das Kabel (3) ausgerichtete Druckluftdüse (9) und eine zentrale Öffnung (10) zur Aufnahme der innerhalb des Schirms (1) befindlichen Elemente (4) des Kabels (3). Ebenso ist eine Sensor- und Steuereinrichtung für die Vorrichtung vorgesehen. Der minimale Durchmesser der Öffnung (8a) in der Zentriereinrichtung (8) ist gleich dem Durchmesser des Schirms (1) des jeweiligen Kabels (3). Weiters ist in der Steuereinrichtung ein Ablauf implementiert, der eine axiale Relativbewegung von zumindest Zentriereinheit (8) und Halteanordnung/Klemmvorrichtung (6) bewirkt, bis der Schirm (1) des Kabels (3) gestaucht ist. Danach wird die Druckluftzufuhr aktiviert.

## Beschreibung

Die Erfindung betrifft eine Vorrichtung zur Öffnung des geflochtenen Schirms eines Kabels, das vorzugsweise eine Schirmfolie enthält, umfassend a) eine Halteanordnung/Klemmvorrichtung zum Klemmen des abgemantelten und vorzugsweise mit einer Stützhülse versehenen Kabels mit einer Zentriereinrichtung, b) zumindest eine axial auf das Kabel ausgerichtete Druckluftdüse, c) eine zentrale Öffnung zur Aufnahme der innerhalb des Schirms befindlichen Elemente des Kabels, und d) einer allenfalls als Modul einer übergeordneten Anlagensteuerung ausgebildeten Sensor- und Steuereinrichtung, nach dem Oberbegriff des Anspruchs 1.

Die Bearbeitung von mehradrigen Kabeln, die insbesondere mit einem Schirmgeflecht und einer äusseren Ummantelung, allenfalls auch mit einer die Adern umhüllenden Folie und/oder einem zentralen Füller, versehen sind, umfasst zumindest einen der Verfahrensschritte Ablängen, Abmanteln der Leitung, Kürzen und Zurückstülpen des Schirms, Entfernen der Folie und Entfernen des innenliegenden Füllers.

Dabei stellen insbesondere HSD (High Speed Data)-Produkte sehr hohe Anforderungen an den Verarbeitungsprozess. So ist es derzeit noch nicht möglich, HSD-Kabel komplett vollautomatisch zu bearbeiten. Aktuell werden die Verarbeitungsschritte Abmanteln, Schirmgeflecht schneiden und zurückstülpen, Folie sowie Füller entfernen manuell oder halbautomatisch auf einzelnen Stationen durchgeführt. Erst die weitere Verarbeitung erfolgt dann auf einem Vollautomaten.

Auch der Bearbeitungsschritt des Öffnens des Schirms wird derzeit bestenfalls halbautomatisch durchgeführt. So ist beispielsweise in der Verarbeitungsstation B24 der Fa. PAWO ein Ablauf vorgesehen, der mit dem Einlegen des Kabels von Hand in die Haltezange beginnt, wobei das Kabel durch einen Zentrierkonus bis zum Startsensor vorgeschoben, dann geklemmt und anschliessend der weitere, automatische Arbeitsablauf ausgelöst wird. Dabei wird der Kabelmantel eingeschnitten und abgezogen, eine Stützhülse über den Schirm gecrimpt und das Kabel vor der Stützhülse durch ein zangenartiges Werkzeug zusammengedrückt, wodurch Schirm und Kabel-Litzen etwas aufgeweitet werden. Dieses Zusammenpressen des Schirms und der Litzen kann zu einer unerwünschten Schwächung der gepressten Bauteile führen und auch der Effekt der pinselförmigen Aufweitung von Litzen und Schirm ist nicht exakt steuerbar.

Mittels Pressluft wird dann der Schirm weiter geöffnet und durch axiale Bewegung wird der Schirm mechanisch zurückgestülpt. Im Zuge des letztgenannten Schrittes, bei dem der Bearbeitungskopf gegen das Kabel fährt, tauchen die freigelegten Litzen in eine zentrale Bohrung eines zentralen Stiftes im Kopf ein, wobei der gefederte Stift zurückgestossen wird und die Leitung in die Bohrung entritt. Der Stift kann auch beispielsweise durch einen Pneumatikantrieb aktiv zurückgezogen werden.

Aufgabe der vorliegenden Erfindung ist es somit, eine Vorrichtung für die Integration in eine vollautomatische Anlage zur Kabelbearbeitung, insbesondere für HSD-Produkte, auszugestalten. Damit soll auch die Verbindung eines Vollautomaten für die Verarbeitung von zumindest an einem Ende vorbereiteten Kabeln mit der möglichst auch vollautomatischen Anlage zur Kabelvorbearbeitung ermöglicht werden.

Die Aufgabe wird durch die Merkmale des unabhängigen Anspruchs 1 gelöst. Vorteilhafte Weiterbildungen sind in den Figuren und in den abhängigen Patentansprüchen dargelegt.

Gemäss der Erfindung ist e) der minimale Durchmesser der Öffnung in der Zentriereinrichtung gleich dem Durchmesser des Schirms des jeweiligen zu bearbeitenden Kabels, sind f) die Halteanordnung/Klemmvorrichtung und die Zentriereinrichtung motorisch relativ zueinander verschiebbar, ist g) in der Steuereinrichtung ein Ablauf implementiert, der eine axiale Relativbewegung der Halteanordnung/Klemmvorrichtung relativ zu zumindest der Zentriereinrichtung in einer Länge bewirkt, bis der Schirm eines in der Halteanordnung/Klemmvorrichtung geklemmten Kabels durch die Zentriereinrichtung gestaucht ist, wonach h) gemäss dem implementierten Ablauf die Druckluftzufuhr in die zumindest eine axial auf den Schirm hin ausgerichtete Druckluftdüse aktivierbar ist. Die Stauchung des Schirms führt in jedem Fall zu einer ersten Ablösung von den darunterliegenden Bauteilen, welche Ablösung dann durch den Einsatz der Druckluft vollendet wird.

Vorzugsweise ist die zentrale Öffnung der Zentriereinrichtung sich in Richtung der Halteanordnung/Klemmvorrichtung kegel/trichterförmig öffnend ausgebildet und läuft im axialen Verlauf bis auf einen minimalen Durchmesser zusammen, der dem Durchmesser des Schirms des jeweiligen Kabels entspricht, und ist in der Steuereinrichtung ein zweiter Ablauf implementiert, der vor Aktivierung der Druckluftzufuhr eine axiale Relativbewegung von Zentriereinheit und Halteanordnung/Klemmvorrichtung in einer Länge bewirkt, bis das abgemantelte Ende des Kabels durch die Öffnung des Führungskonus mit minimalem Durchmesser hindurchgeschoben ist. Damit kann durch ein Bauteil sowohl die sichere und zentrierende Einführung des zu bearbeitenden Ende des Kabels mit dem Beginn der Bearbeitung und der funktionssicheren Stauchung des Schirms zu dessen Ablösung von den darunterliegenden Bauteilen erzielt werden.

Bevorzugt ist weiters vorgesehen, dass die Zentriereinrichtung entfernbar ausgeführt ist, vorzugsweise aus zwei entlang einer Ebene durch die Kabelachse geteilten und im Wesentlichen radial zur Kabelachse verfahrbaren Hälften besteht. Damit kann das Kabelende einfach und rasch zur weiteren Bearbeitung, insbesondere zum kompletten Aufstellen des Schirms in die gewünschte Position, zugänglich gemacht werden.

Eine weitere Ausführungsform der Erfindung ist dadurch gekennzeichnet, dass die Druckluftdüse ringförmig ausgebildet ist bzw. eine Anordnung von mehreren Druckluftdüsen ringförmig um die zentrale Öffnung vorgesehen ist, welche einen Innendurchmesser aufweist, der dem Aussendurchmesser der innerhalb des Schirms befindlichen Elemente des Kabels entspricht, und dass in der Steuereinrichtung ein dritter Ablauf implementiert ist, der vor Aktivierung der Druckluftzufuhr eine axiale Relativbewegung von zentraler Öffnung und Halteanordnung/Klemmvorrichtung in einer Länge bewirkt, bis das Kabelende mit den unter dem Schirm liegenden Teilen in die zentrale Öffnung eingetaucht ist. Dies ermöglicht das komplette Aufstellen des Schirms in die gewünschte Position durch eine optimale Verbindung der Wirkung der Druckluft als auch der mechanischen Einwirkung auf den bereits teilweise aufgestellten Schirm.

Dabei ist vorzugsweise in der Steuereinrichtung ein vierter Ablauf implementiert, gemäss welchem die Druckluftzufuhr erst nach Entfernung der Zentriereinheit aktiviert wird, wodurch die Wirkung der Druckluft auf den vorab durch die Zentriereinheit gestauchten Bereich des Schirms verbessert wird.

Bevorzugt ist vorgesehen, dass die relative Lage von zentraler Öffnung und jeder Druckluftdüse unveränderlich ist, insbesondere axial in Richtung der relativen Bewegung von zentraler Öffnung und Halteanordnung/Klemmvorrichtung. Dies ermöglicht einen einfacheren, funktionssicheren und kompakteren Aufbau einer der zentralen Baugruppen der Vorrichtung.

Um eine Stütze vorzusehen, damit der Schirm bei der Beaufschlagung mit Druckluft nicht zu weit nach hinten geblasen wird, sondern sich in eine geometrisch definierte Lage begibt, ist ein zwischen Halteanordnung/Klemmvorrichtung und Druckluftdüse sich in Richtung auf die Druckluftdüse hin verjüngender, im Wesentlichen kegelförmiger Aufstellanschlag um das Kabel herum ansetzbar, wobei der Aufstellanschlag eine zentrale und der Druckluftdüse gegenüberliegende Durchführöffnung für das Kabel aufweist.

Dabei ist dieser Aufstellanschlag vorzugsweise entfernbar ausgeführt, vorzugsweise aus zwei entlang einer Ebene durch die Kabelachse geteilten und im Wesentlichen radial zur Kabelachse verfahrbaren, vorzugsweise verschwenkbaren Hälften besteht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine beispielhafte Ausführungsform einer erfindungsgemässen Vorrichtung vor Beginn der Bearbeitung des antransportierten Kabels,
- Fig. 2: die Vorrichtung von Fig. 1 mit in der Halteanordnung/Klemmvorrichtung geklemmtem Kabel,
- Fig. 3: die Vorrichtung der Fig. 1 und 2 kurz vor Beginn der Aktivierung der Druckluftdüse,
- Fig. 4: einen Ausschnitt der Fig. 3 in vergrössertem Massstab,
- Fig. 5: die Vorrichtung der Fig. 1 bis 4 mit entfernter Zentriereinrichtung,
- Fig. 6: die Vorrichtung der Fig. 1 bis 5 mit in die zentrale Öffnung des Bearbeitungskopfes eingeschobenem Kabelende, und
- Fig. 7: eine weitere Ausführungsform der erfindungsgemässen Vorrichtung mit einem Aufstellanschlag für den Schirm.

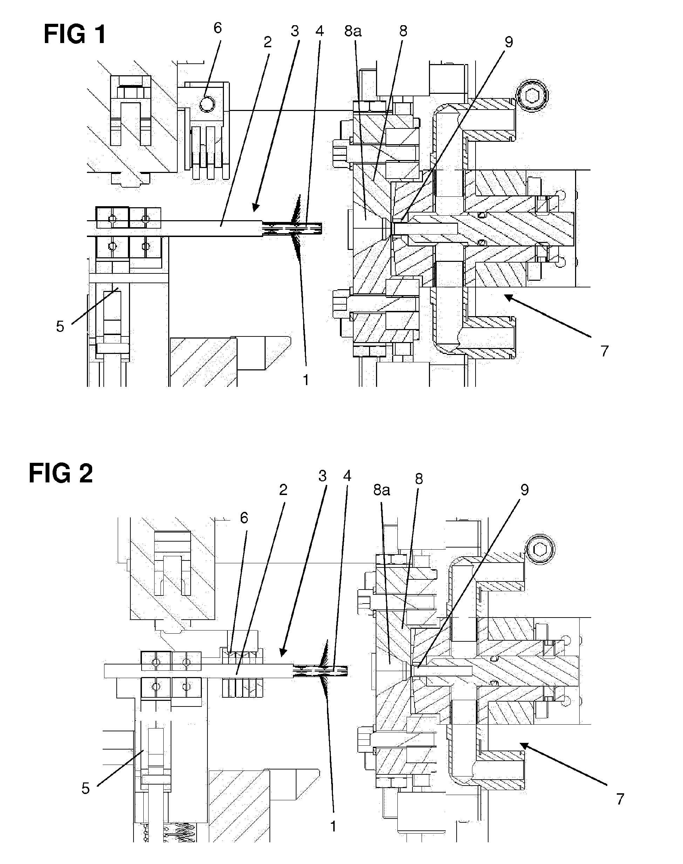

Fig. 1 zeigt eine konkrete, beispielhafte Vorrichtung zur Öffnung des geflochtenen Schirms 1 eines mit einer Ummantelung 2 versehenen Kabels 3, das vorzugsweise auch eine Schirmfolie (nicht erkennbar) um die innenliegenden Leiter 4 bzw. Litzen herum enthält. Das Kabel 3 wird durch ein Transportsystem, beispielsweise eine entlang einer Führungsbahn verfahrbare Transportpalette 5, angeliefert und gelangt so zur Arbeitsstation für die Öffnung des Schirms 1, wo es durch deren Halteanordnung/Klemmvorrichtung 6 (in Fig. 1 noch in geöffnetem Zustand dargestellt) geklemmt wird (wie in Fig. 2 dargestellt ist). Das zur Bearbeitung vorgesehene Ende des Kabels 3 ist bereits vorher abgemantelt und vorzugsweise auch mit einer Stützhülse versehen worden.

Der Bearbeitungskopf 7 der erfindungsgemässen Vorrichtung umfasst eine Zentriereinrichtung 8 und zumindest eine axial auf das Kabel 3 ausgerichtete Druckluftdüse 9. Dabei entspricht der minimale Durchmesser der zentralen Öffnung 8a der Zentriereinrichtung 8 im Wesentlichen dem Durchmesser des Schirms 1 des jeweiligen Kabels 3 und ist in jedem Fall so gross, dass alle innerhalb des Schirms 1 liegenden Elemente des Kabels 3, insbesondere die inneren Leiter 4, durch die Öffnung 8a hindurchpassen. Vorzugsweise ist die zentrale Öffnung 8a der Zentriereinrichtung 8 sich in Richtung auf die Halteanordnung/Klemmvorrichtung 6 hin kegelförmig öffnend ausgebildet und läuft im axialen Verlauf in Richtung auf die Druckluftdüse 9 bis auf ihren minimalen Durchmesser zusammen. Selbstverständlich sind die Zentriereinrichtung 8 bzw. deren Öffnung 8a auf die jeweilige Kabeldimension abzustimmen, beispielsweise durch Austausch der kompletten Zentriereinrichtung, durch Austausch von auswechselbaren Einsätzen in Gehäusen, aber auch durch manuelle oder automatische Verstellung der relevanten Durchmesser. Derartige Konstruktionen sind Stand der Technik. Die gleiche Art von Adaptierung an die Kabeldimensionen sind bei allen Durchführungen oder das Kabel umgreifenden Elementen sinngemäss durchzuführen.

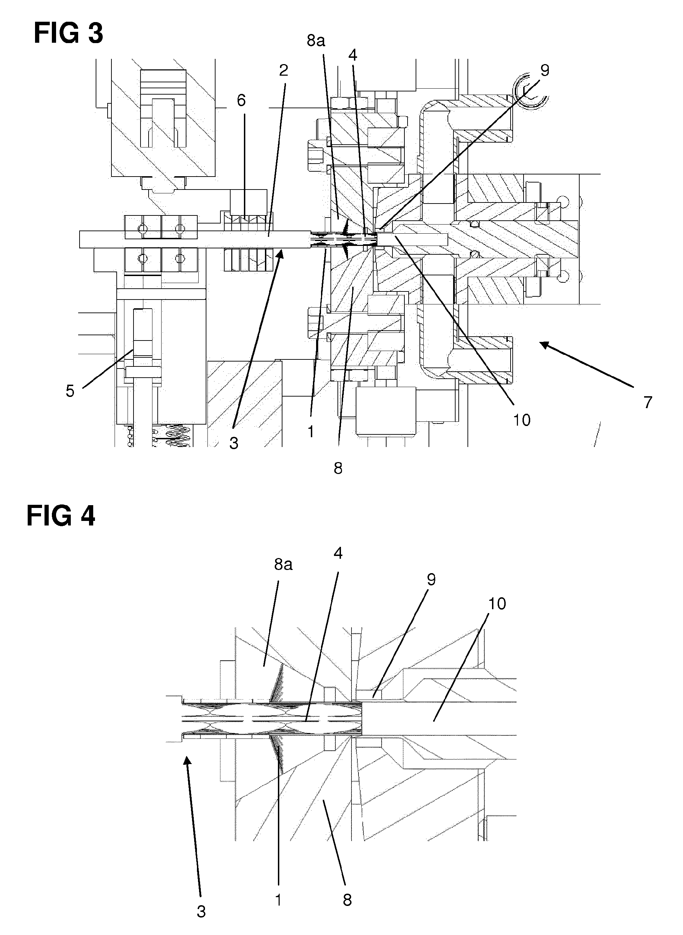

In der Steuereinrichtung für die erfindungsgemässe Vorrichtung, die auch als Modul einer übergeordneten Anlagensteuerung realisiert sein kann, ist in Form vorzugsweise eines gespeicherten lauffähigen Computerprogrammproduktes ein Verfahrensablauf implementiert, der die Abläufe zur Bewegung und Aktivierung der einzelnen Elemente der Vorrichtung steuert. So umfasst dieser Ablauf in jedem Fall eine axiale Relativbewegung des Bearbeitungskopfes 7 und der Halteanordnung/Klemmvorrichtung 6 in einer Länge, bis der - hier noch am Kabel 3 anliegende - Schirm 1 eines in der Halteanordnung/Klemmvorrichtung 6 geklemmten Kabels 3 in die Zentriereinrichtung 8 eingefahren ist, bis die Enden der Leiter 4 des Kabels 3 durch die zentrale Öffnung 8a hindurchgeführt worden sind und dadurch der Schirm 1 derart gestaucht ist, dass er ein wenig von den innenliegenden Elementen des Kabels 1 abgehoben ist. Diese Stellung von Halteanordnung/Klemmvorrichtung 6 und Bearbeitungskopf 7 ist in Fig. 3 und in vergrössertem Massstab in Fig. 4 dargestellt. Vorzugsweise wird der Bearbeitungskopf 7 auf die Halteanordnung/Klemmvorrichtung 6 hin bewegt.

Vor oder zumindest gleichzeitig mit der Aktivierung der Druckluftzufuhr in die zumindest eine axial auf den Schirm 1 hin ausgerichtete Druckluftdüse 9 wird, wie in Fig. 4 zu sehen ist, die Zentriereinrichtung 8 entfernt, um das ungehinderte Aufrichten des Schirms 1 durch die Wirkung des Druckluftstroms zu ermöglichen. Bevorzugt besteht zu diesem Zweck die Zentriereinrichtung 8 aus zwei entlang einer Ebene durch die Kabelachse geteilten und im Wesentlichen radial zur Achse des Kabels 3 verfahrbaren oder auch entlang gekrümmten Bahnen wegschwenkbaren Hälften 8b, 8c. Die vorhergehende Stauchung des Schirms 1 führt in jedem Fall zu einer ersten Ablösung von den darunterliegenden Bauteilen, welche Ablösung dann durch den Einsatz der Druckluft vollendet wird.

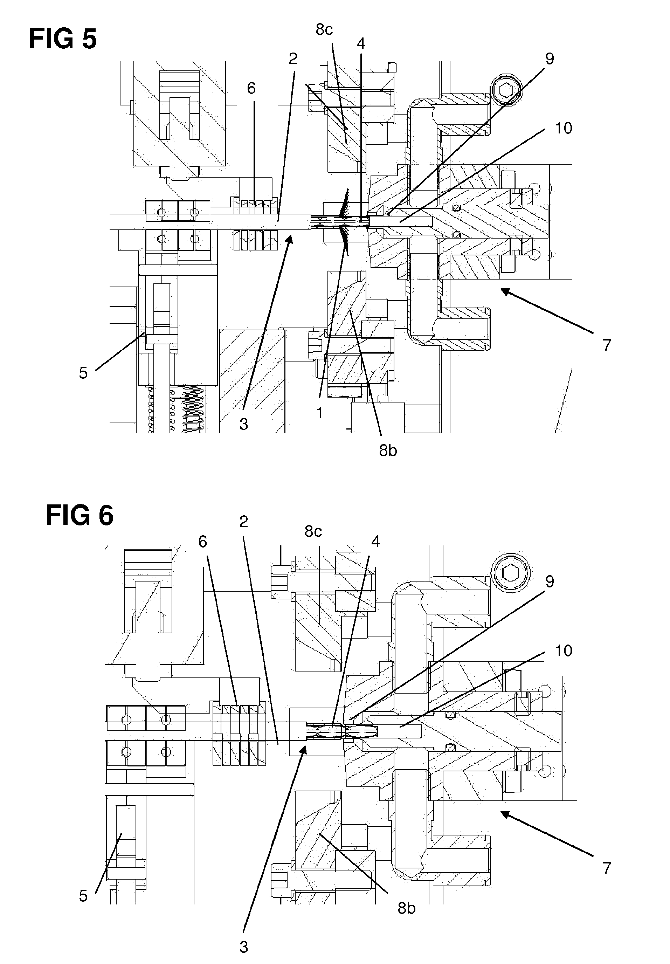

Wie insbesondere in der Fig. 4 mit der vergrösserten Darstellung der zentralen Öffnung 8a in der Zentriereinrichtung 8 und der gegenüberliegenden Druckluftdüse 9 deutlich zu erkennen ist, ist diese Druckluftdüse 9 vorteilhafterweise ringförmig um eine zentrale Öffnung 10 ausgearbeitet, wobei die relative Lage von zentraler Öffnung 10 und jeder Druckluftdüse 9 unveränderlich ist, insbesondere axial in Richtung der relativen Bewegung von zentraler Öffnung 10 und Halteanordnung/Klemmvorrichtung 6. Gegebenenfalls kann auch eine ringförmige Anordnung von mehreren Düsen vorgesehen sein. Diese zentrale Öffnung 10 hat einen minimalen Innendurchmesser, der dem Aussendurchmesser der innerhalb des Schirms 1 befindlichen Elemente des Kabels 3 entspricht. Die Steuereinrichtung bewirkt vorteilhafterweise bereits während der Druckluftzufuhr, jedenfalls aber nach Beendigung der Druckluftzufuhr durch die Druckluftdüse 9, eine weitere Relativbewegung von Halteanordnung/Klemmvorrichtung 6 und Bearbeitungskopf 7, durch welche das Ende des Kabels 3 um einen bestimmten Weg in die zentrale Öffnung 10 innerhalb der Druckluftdüse 9 eingeschoben wird. Die dann erreichte Stellung ist in Fig. 6 dargestellt, in welcher Stellung das Kabelende mit den unter dem Schirm 1 liegenden Teilen in die zentrale Öffnung 10 eingetaucht ist. Damit ergänzen sich die mechanische Wirkung durch das Stauchen des Schirms 1 und die Wirkung der Druckluft für die Gewährleistung des kompletten Aufstellens des Schirms 1 in die gewünschte Position.

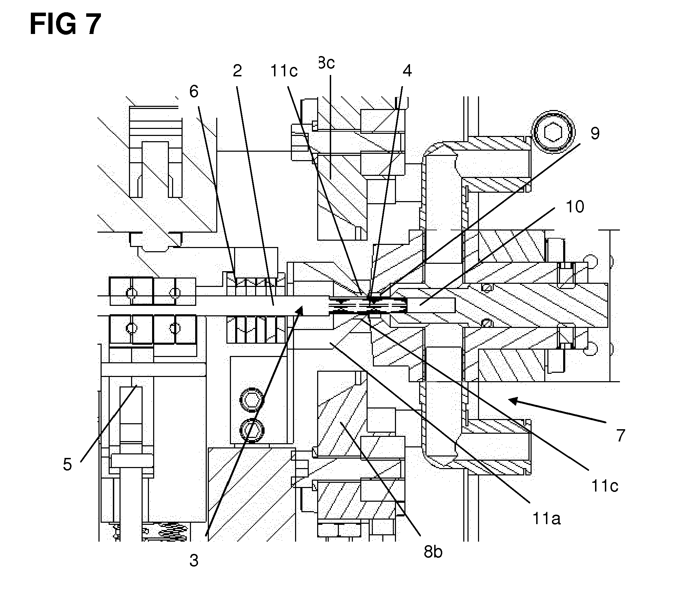

Um eine genau definierte geometrische Lage des Schirms 1 bei dessen Beaufschlagung mit Druckluft zu gewährleisten, kann entsprechend der in Fig. 7 dargestellten Ausführungsform der Erfindung zwischen Halteanordnung/Klemmvorrichtung 6 und Bearbeitungskopf 7, insbesondere dessen Druckluftdüse 9, ein sich in Richtung auf die Druckluftdüse 9 hin verjüngender, im Wesentlichen kegelförmiger Aufstellanschlag 11 um das Kabel 3 herum ansetzbar sein. Vorzugsweise ist zur einfacheren Einbindung in die Vorrichtung dieser Aufstellanschlag 11 entfernbar ausgeführt, wobei er vorteilhafterweise - ähnlich dem Zentrierelement 8 - aus zwei entlang einer Ebene durch die Achse des Kabels 3 geteilten und im Wesentlichen radial zu dieser Achse verfahrbaren, vorzugsweise verschwenkbaren Hälften 11a, 11b besteht. Bei geschlossener Stellung der beiden Hälften 11a, 11b bleibt nur eine zentrale Durchführöffnung 11 c für das Kabel 3 in Verlängerung der zentralen Öffnung 10 des Bearbeitungskopfes 7 offen.

Nach Beendigung aller oben erläuterten Abläufe wird auch die Haltevorrichtung 6 wieder geöffnet und das nicht mehr geklemmte Kabel 3 kann mit geöffnetem und aufgestelltem Schirm 1 durch die Transportpalette 5 wieder abtransportiert, vorzugsweise zu einer nachfolgenden Bearbeitungsstation angeliefert, werden.

Besonders vorteilhaft ist die Verwendung der erfindungsgemässen Vorrichtung in einer Anlage zur Bearbeitung eines mehradrigen Kabels, insbesondere für HSD-Produkte. Die Vorrichtung kann dabei als eine von mehreren vollautomatischen Bearbeitungsstationen vorgesehen sein, die neben dem Öffnen und Aufstellen des Schirms auch noch das Abmanteln, das Kürzen und Zurückstülpen des Schirms, das Entfernen einer allfälligen Folie und das Entfernen eines allfälligen innenliegenden Füllers bewerkstelligen. Für den vollautomatischen Betrieb ist weiters noch eine Transportvorrichtung zum Transport von abgelängten Kabeln von und zu den Stationen sowie zu einer vorzugsweise ebenfalls vollautomatischen Verarbeitungsanlage vorgesehen.

### Bezugszeichenliste

- 1: Schirm
- 2: Ummantelung
- 3: Kabel
- 4: Leiter, Litzen
- 5: Transportpalette
- 6: Halteanordnung
- 7: Bearbeitungskopf
- 8: Zentriereinrichtung
- 8a: Zentrale Öffnung der Zentriereinrichtung
- 8b, 8c: Hälften der Zentriereinrichtung
- 9: Druckluftdüse
- 10: Zentrale Öffnung des Bearbeitungskopfes
- 11: Aufstellanschlag
- 11a, 11b: Hälften des Aufstellanschlages
- 11c: Durchführöffnung des Aufstellanschlages

## Patentansprüche

1. Vorrichtung zur Öffnung des geflochtenen Schirms (1) eines Kabels (3), das vorzugsweise eine Schirmfolie enthält, umfassend
a) eine Halteanordnung/Klemmvorrichtung (6) zum Klemmen des abgemantelten und vorzugsweise mit einer Stützhülse versehenen Kabels (3) mit einer Zentriereinrichtung (8),
b) zumindest eine axial auf das Kabel (3) ausgerichtete Druckluftdüse (9),
c) eine zentrale Öffnung (10) zur Aufnahme der innerhalb des Schirms (1) befindlichen Elemente des Kabels (3),
d) einer allenfalls als Modul einer übergeordneten Anlagensteuerung ausgebildeten Sensor- und Steuereinrichtung,
**dadurch gekennzeichnet, dass**
e) der minimale Durchmesser der Öffnung in der Zentriereinrichtung (8) gleich dem Durchmesser des Schirms (1) des jeweiligen zu bearbeitenden Kabels (3) ist, und dass
f) die Halteanordnung/Klemmvorrichtung (6) und die Zentriereinrichtung (8) motorisch relativ zueinander verschiebbar sind, und dass
g) in der Steuereinrichtung ein Ablauf implementiert ist, der eine axiale Relativbewegung der Halteanordnung/Klemmvorrichtung (6) relativ zu zumindest der Zentriereinrichtung (8) in einer Länge bewirkt, bis der Schirm (1) eines in der Halteanordnung/Klemmvorrichtung (6) geklemmten Kabels (3) durch die Zentriereinrichtung (8) gestaucht ist, wonach
h) gemäss dem implementierten Ablauf die Druckluftzufuhr in die zumindest eine axial auf den Schirm (1) hin ausgerichtete Druckluftdüse (9) aktivierbar ist.

2. Vorrichtung nach Anspruch 1, **dadurch gekennzeichnet, dass** eine zentrale Öffnung (8a) der Zentriereinrichtung (8) sich in Richtung der Halteanordnung/Klemmvorrichtung (6) kegel/trichterförmig öffnend ausgebildet ist und im axialen Verlauf bis auf einen minimalen Durchmesser zusammenläuft, der dem Durchmesser des Schirms (1) des jeweiligen Kabels (3) entspricht, und in der Steuereinrichtung ein zweiter Ablauf implementiert ist, der vor Aktivierung der Druckluftzufuhr eine axiale Relativbewegung von Zentriereinheit (8) und Halteanordnung/Klemmvorrichtung (6) in einer Länge bewirkt, bis das abgemantelte Ende des Kabels (3) durch die Öffnung des Führungskonus mit minimalem Durchmesser hindurchgeschoben ist.

3. Vorrichtung nach Anspruch 1 oder 2, **dadurch gekennzeichnet, dass** die Zentriereinrichtung (8) entfernbar ausgeführt ist und vorzugsweise aus wenigstens zwei Hälften (8b, 8c) besteht, die im Wesentlichen radial zur Kabelachse verfahrbar sind.

4. Vorrichtung nach einem der vorhergehenden Ansprüche, **dadurch gekennzeichnet, dass** die Druckluftdüse (9) ringförmig ausgebildet ist **oder dass** eine Anordnung von mehreren Druckluftdüsen ringförmig um die zentrale Öffnung (10) vorgesehen ist, welche einen Innendurchmesser aufweist, der dem Aussendurchmesser der innerhalb des Schirms (1) befindlichen Elemente entspricht, und dass in der Steuereinrichtung ein dritter Ablauf implementiert ist, der vor Aktivierung der Druckluftzufuhr eine axiale Relativbewegung von zentraler Öffnung (10) und Halteanordnung/Klemmvorrichtung (6) in einer Länge bewirkt, bis das Kabelende mit den unter dem Schirm (1) liegenden Teilen in die zentrale Öffnung (10) eingetaucht ist.

5. Vorrichtung nach einem der vorhergehenden Ansprüche, **dadurch gekennzeichnet, dass** in der Steuereinrichtung ein vierter Ablauf implementiert ist, gemäss welchem die Druckluftzufuhr erst nach Entfernung der Zentriereinheit (8) aktivierbar ist.

6. Vorrichtung nach einem der vorhergehenden Ansprüche, **dadurch gekennzeichnet, dass** die relative Lage von zentraler Öffnung (10) und jeder Druckluftdüse (9) unveränderlich ist, insbesondere axial in Richtung der relativen Bewegung von zentraler Öffnung (10) und Halteanordnung/Klemmvorrichtung (6).

7. Vorrichtung nach einem der vorhergehenden Ansprüche, **dadurch gekennzeichnet, dass** zwischen Halteanordnung/Klemmvorrichtung (6) und Druckluftdüse (9) ein sich in Richtung auf die Druckluftdüse (9) hin verjüngender, im Wesentlichen kegelförmiger Aufstellanschlag (11) um das Kabel (3) herum ansetzbar ist, wobei der Aufstellanschlag (11) eine zentrale und der Druckluftdüse (9) gegenüberliegende Durchführöffnung (11 c) für das Kabel (3) aufweist.

8. Vorrichtung nach Anspruch 7, **dadurch gekennzeichnet, dass** der Aufstellanschlag (11) entfernbar ausgeführt ist, vorzugsweise aus zwei entlang einer Ebene durch die Kabelachse geteilten und im Wesentlichen radial zur Kabelachse verfahrbaren, vorzugsweise verschwenkbaren, Hälften (11a, 11 b) besteht.
